Europäisches Patentamt

(19) European Patent Office                    (11) Publication number:          0 096 970

Office européen des brevets                                                 B1

(12)                    EUROPEAN PATENT SPECIFICATION

(45) Date of publication of patent specification: 02.01.86     (51) Int. Cl.⁴: C 01 C 1/00

(21) Application number: 83302784.0

(22) Date of filing: 17.05.83

(54) Removal of sulphur contaminant from ammonia.

(30) Priority: 21.05.82 US 380784

(43) Date of publication of application:
28.12.83 Bulletin 83/52

(45) Publication of the grant of the patent:
02.01.86 Bulletin 86/01

(84) Designated Contracting States:
BE DE FR GB NL

(56) References cited:
FR-A- 702 667
FR-A-1 093 863
GB-A- 973 716
US-A-2 926 070
US-A-3 335 071
US-A-3 340 182
US-A-3 383 173
US-A-3 600 283

(73) Proprietor: CHEVRON RESEARCH COMPANY
525 Market Street
San Francisco California 94105 (US)

(72) Inventor: Wilkes, John B.
2935 Oxford Avenue
Richmond California 94806 (US)

(74) Representative: Kosmin, Gerald Emmanuel et al
HASELTINE, LAKE & CO. Hazlitt House
28 Southampton Buildings Chancery Lane
London, WC2A 1AT (GB)

Courier Press, Leamington Spa, England.

## Description

This invention relates to a method of treating ammonia contaminated with sulphur in order to remove therefrom the sulphur contaminant.

The term "sulphur contaminant" is used herein as meaning a sulphur containing substance selected from hydrogen sulphide ($H_2S$); mercaptans (e.g. $R^1SH$ wherein $R^1$ is alkyl of 1 to 8 carbons); organic sulphides (e.g. $R^1SR^2$ wherein $R^1$ and $R^2$ are independently alkyl of 1 to 8 carbons); and organic disulphides (e.g. $R^1SSR^2$ wherein $R^1$ and $R^2$ are independently alkyl of 1 to 8 carbons).

The term "alkyl" includes both straight- and branched-chain alkyl groups.

Ammonia and hydrogen sulphide are produced during the processing of crude hydrocarbon oils and shale oil, and in the processing of coal and lignite to form liquid or gaseous fuels. The hydrogen sulphide is usually converted to elemental sulphur by the Claus process, and the by-product ammonia is often burned to nitrogen in the Claus furnace. However, the burning of ammonia to nitrogen not only involves the destruction of a valuable material, but can also cause operating difficulties in the Claus furnace. Destruction of the ammonia by combustion outside a Claus furnace may be impractical as levels of nitrous oxide which exceed the U.S. Environmental Protection Agency's standards for this pollutant may be generated.

Ammonia can be recovered from effluent streams by an ammonia recovery process such as described in U.S. Patents Nos. 3,335,071 and 3,600,283. Purification of this by-product ammonia has been carried out by contacting the ammonia vapour stream with an aqueous ammonia stream as described in U.S. Patent No. 3,383,173. However, U.S. Patent No. 3,383,173 points out that acid gases such as $H_2S$ cannot be completely removed by this process, although the $H_2S$ content may be reduced to below 100 wt. ppm: (parts by weight per million) by the process.

In addition, it has been found that the by-product ammonia even after treatment by the process described in U.S. Patent No. 3,383,173 often contains from 10 to 60 ppm of sulphur in the form of organic sulphur compounds containing up to eight or more carbon atoms per sulphur atom. These organic sulphur compounds have unpleasant odours which are detectable at extremely low concentrations. In some uses, for example the production of ammonium salts such as the nitrate, sulphate, or phosphate for fertilizer, the ammonia is converted to non-volatile compounds which are free of ammonia odour, but the organic sulphide compounds remain and result in pollution problems.

In order to make the by-product ammonia acceptable for general use, there is need to remove the sulphur contamination to a very low level, preferably below 1 wt. ppm of sulphur.

Zinc oxide has previously been used to reduce the level of sulphur contamination in natural gas and hydrogen as described in *Hydrocarbon Processing,* pp. 126—128, January 1971; and *Encyclopedia of Chemical Processing and Design,* Marcel Dekker, Inc., of Volume III, pp. 264—267 (1977).

However, unlike hydrogen and hydrocarbons, which are relatively unreactive with $Zn^{+2}$, ammonia has a high heat of ammination with $Zn^{+2}$, reacting to produce complexes such as the tetraammonia zinc complex $[(NH_3)_4Zn]^{+2}$ as described in the *Journal of the Chemical Society,* pp. 2023—2027 (1952).

We have nevertheless now found that, in spite of its tendency to complex with ammonia, zinc oxide is surprisingly effective in removing sulphur contaminant from ammonia.

Thus in accordance with the invention, there is provided a method of removing sulphur contaminant (as hereinbefore defined) from ammonia, which comprises contacting the ammonia with zinc oxide to remove the sulphur. Generally a bed of zinc oxide catalyst is employed.

In part, due to its greater efficiency over an extended period of time in removing sulphur contaminant from ammonia, the method is preferably operated at a temperature in the range from 500 to 850°F (260—454°C). Most preferably, the method is conducted at from 600 to 850°F (316—454°C).

The contacting is generally conducted at a pressure of from atmospheric pressure to 3000 psig (20685 kPa). Preferably the method is conducted at a pressure of from 5 to 1000 psig (34.5—6895 kPa), and most preferably from 30—150 psig (206.85—1034.25 kPa).

The contacting is generally effected at space velocities of 100 to 3000 hours$^{-1}$, preferably 200 to 2000 hours$^{-1}$ and most preferably 300 to 1500 hours$^{-1}$.

The term "space velocity" as used herein refers to the ratio:

$$\frac{\text{Volume of ammonia per hour at 60°F (15.6°C) and 1 atmosphere}}{\text{Volume of Catalyst}} = \text{space velocity}$$

and is expressed in terms of hours$^{-1}$.

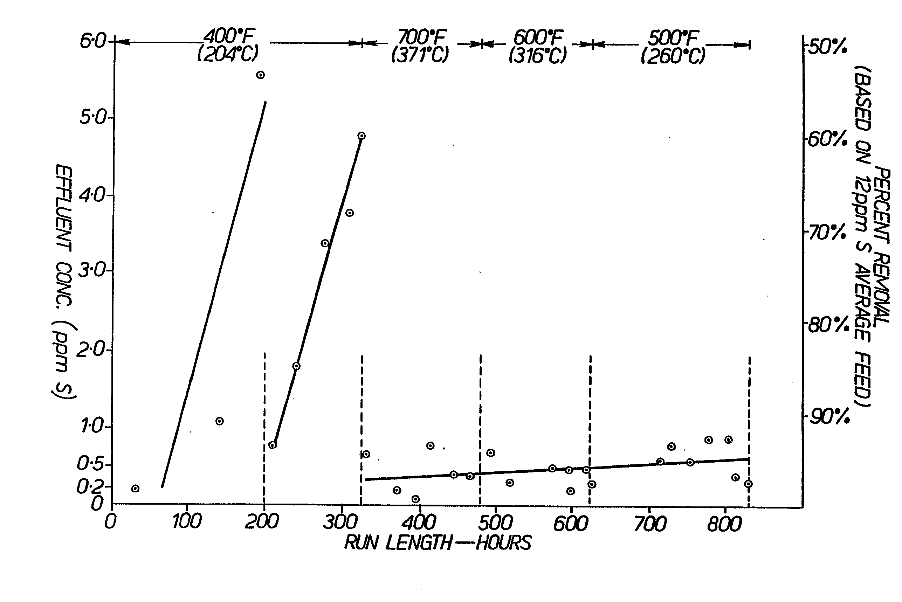

For a better understanding of the invention, reference will now be made to the accompanying drawing which graphically illustrates the removal of sulphur contamination from a gaseous ammonia stream using zinc oxide over both a period of time and a range of temperatures.

The ability of zinc oxide to remove sulphur contaminant from an ammonia stream in accordance with the invention was tested over a range of temperatures and for an extended period of time using a commercially available zinc oxide catalyst. The space velocity employed was 1500 hours$^{-1}$ at 90 psig (620.55 kPa) and the stream of ammonia, which was obtained from a plant in which ammonia was recovered and purified as described in U.S Patent No. 3,383,173, had an average sulphur contamination of 12 ppm. The removal of the sulphur contaminant from the ammonia stream was measured as a function of time and temperature. The amount of sulphur contaminant removed is shown in percentage terms in the drawing. As shown in the drawing, from 500°F (260°C) and above, more than 90% of the sulphur contaminant is consistently removed from the ammonia stream over 300 running hours or more to give a product containing less than 1 ppm sulphur contaminant. Below 500°F (260°C), the ability of zinc oxide to remove the contaminating sulphur is diminished over a period of 300 hours, although the zinc oxide is still removing over 50% of the sulphur contaminant at this time.

The removal of contaminating sulphur by zinc oxide is of particular importance in waste-water treating processes. Waste-water treating processes are described in detail in, for instance, the aforementioned U.S. Patents Nos. 3,335,071, 3,600,283 and 3,383,173, and also in U.S. Patent No. 3,340,182. During these processes, a stream of ammonia contaminated with sulphur is produced. The present invention is particularly suitable for removing the contaminating sulphur from the ammonia stream produced during these processes.

## Claims

1. A method of removing sulphur contaminant selected from hydrogen sulphide mercaptans, organic sulphides and organic disulphides from ammonia, which comprises contacting the ammonia with zinc oxide to remove the sulphur.

2. A method according to Claim 1, wherein the contacting is conducted at from 500 to 850°F (260—454°C).

3. A method according to Claim 1 or 2, wherein the contacting is conducted at a pressure of from 5 to 1000 psig (34.5—6895 kPa).

4. A method according to Claim 1, 2 or 3, wherein the contacting is conducted using a space velocity of from 200 to 2000 hours$^{-1}$.

5. A method according to Claim 1, 2, 3 or 4, wherein the sulphur contaminated ammonia is generated during the processing of crude hydrocarbon oils or shale oil, or in the processing of coal or lignite to form liquid or gaseous fuels.

## Patentansprüche

1. Verfahren zur Entfernung von Schwefelverunreinigungen, ausgewählt aus Schwefelwasserstoff, Mercaptan, organischen Sulfiden und organischen Disulfiden, und Ammoniak, dadurch gekennzeichnet, daß das Ammoniak mit Zinkoxid zur Entfernung des Schwefels kontaktiert wird.

2. Verfahren nach Anspruch 1, dadurch gekennzeichnet, daß die Kontaktierung bei 500 bis 850°F (260 bis 454°C) durchgeführt wird.

3. Verfahren nach Anspruch 1 oder 2, dadurch gekennzeichnet, daß die Kontaktierung unter einem Druck von 5 bis 100 psig (34,5 bis 6895 kPa) durchgeführt wird.

4. Verfahren nach Anspruch 1, 2 oder 3, dadurch gekennzeichnet, daß die Kontaktierung unter Einhaltung einer Raumgeschwindigkeit von 200 bis 2000 Stunden$^{-1}$ durchgeführt wird.

5. Verfahren nach Anspruch 1, 2, 3 oder 4, dadurch gekennzeichnet, daß das mit Schwefel verunreinigte Ammoniak während der Verarbeitung von hohen Kohlenwasserstoffölen oder Schieferöl oder bei der Verarbeitung von Kohle oder Lignit unter Bildung von flüssigen oder gasförmigen Treibstoffen erzeugt wird.

## Revendications

1. Procédé pour éliminer une impureté sulfurée, choisie entre ls sulfure d'hydrogène des mercaptans, des sulfures organiques et des disulfures organiques, de l'ammoniac, qui consiste à faire entrer l'ammoniac en contact avec de l'oxyde de zinc pour éliminer le soufre.

2. Procédé suivant la revendication 1, dans lequel la mise en contact est effectuée à 500—850°F (260—454°C).

3. Procédé suivant la revendication 1 ou 2, dans lequel la mise en contact est effectuée à une pression manométrique de 5 à 1000 lb/in$^2$ (34,5—6895 kPa).

4. Procédé suivant la revendication 1, 2 ou 3, dans lequel la mise en contact est effectée en utilisant une vitesse spatiale de 200 à 2000 h$^{-1}$.

5. Procédé suivant la revendication 1, 2, 3 ou 4, dans laquelle l'ammoniac contaminé par du soufre est engendré pendant le traitement d'huiles hydrocarbonées brutes ou d'huile de schiste ou au cours du traitement de charbon ou de lignite pour former des carburants liquides ou gazeux.